# EUROPEAN PATENT APPLICATION

(11) **EP 2 168 446 A1**
(43) Date of publication of application: **31.03.2010**
(21) Application number: 08740921.5
(22) Date of filing: 30.04.2008
(51) Int. Cl.: A23L 3/36, A23L 1/48

(54) **REFRIGERATED PRODUCT OF COOKED FOOD, FROZEN PRODUCT OF COOKED FOOD, STORAGE METHOD AND STORAGE APPARATUS**

(30) Priority: 04.06.2007 JP 2007148489
(71) Applicant: Mayekawa Mfg. Co., Ltd., Koto-ku Tokyo 135-8482 (JP); Takaki Bakery Co., Ltd., Hiroshima 730-4500 (JP)
(72) Inventor: NARUMIYA, Tadaoki, Tokyo 1350046 (JP); ASANO, Takaya, Tokyo 135-0046 (JP); OHASHI, Shuji, Hiroshima-shi Hiroshima 730-4500 (JP); NAKASHIMA, Toshinobu, Hiroshima-shi Hiroshima 730-4500 (JP); SASAKI, Isamu, Hiroshima-shi Hiroshima 730-4500 (JP); HATAOKA, Isao, Hiroshima-shi Hiroshima 730-4500 (JP)
(74) Representative: Collin, Jérôme
(86) International application number: PCT/JP2008/058253
(87) International publication number: WO 2008/149626

(57) **Abstract**

It is intended to provide a frozen product of a cooked food and a refrigerated product of a cooked food, wherein multiple kinds of cooked food materials to be re-heated under different conditions, which have been stored over a long time within a freezing temperature range or a refrigerating temperature range, can be heated, re-cooked and cold-sterilized by procedures appropriate for the moisture content required by the food even by simultaneously re-heating and keeping in an atmosphere at the same temperature; a storage method and a storage apparatus. A base is prepared by adding an inflating agent to a dough, bubbling air into the dough or fermenting the dough by adding a yeast and then baking. Next, topping(s) are provided on the base or fillings are enclosed in the dough followed by baking to give a cooked food. The cooked food is then refrigerated or frozen while or after spraying water thereto, or it is frozen and then water is sprayed thereto. Subsequently, the refrigerated or frozen cooked food is packaged airtightly or substantially airtightly.

## Description

### BACKGROUND OF THE INVENTION

### Field of the Invention

The present invention relates to a chilled product or a frozen product of a heated/cooked food such as a hot dog or a pizza, which is produced by adding an inflating agent (such as baking powder) to the dough of the food, including air (air bubbles) in the dough or adding yeast in the dough to ferment, baking the dough so as to form the base of the food, and providing the base of the food with at least one topping. The invention also relates to a chilled or frozen product of a heated/cooked food such as a such as a Chinese style steamed bun or steamed bread, which is produced by adding an inflating agent to the dough of the food, including air (air bubbles) in the dough or adding yeast in the dough to ferment, and steaming the dough. Further, the invention also relates to the preservation method and the preservation device for the food products.
More in detail, the invention relates to a chilled product or a frozen product of multiple kinds of the heated/cooked foods that have been preserved in a freezing or refrigerating temperature condition over a long period so as to be re-heated under different warming conditions, the foods being able to be simultaneously re-heated and thermally insulated (incubated) in a common temperature atmosphere, as well as the preservation method and the preservation device for the food products
In addition, in this specification, the words "heated/cooked food," "heated and cooked food," and "heated-and-cooked food" will be used fundamentally synonymously. The word "incubate" will be used to express a meaning "keep in a warm or hot condition." Further, the "STORAGE APPARATUS" in the title of the invention or "the preservation device" in the above may be considered as a whole system by which a heated and cooked hood is manufactured, and served or sold. In a similar way, the "STORAGE METHOD" in the title of the invention or "the preservation method" in the above may be considered as a whole process of steps in response to the method.

### Background of the Invention

Conventionally, a food product has been frozen in order to be preserved for a long time span and heated up to a warm temperature condition from a normal temperature to a temperature around 60 degrees Celsius, before being served. Generally, defrosting is performed by re-heating.
For example, a Chinese style steamed bun is served as a commodity after heating up the bun to around 60°C under a steaming condition in a heating receptacle like a showcase that is placed near the cashier of the convenience store so that the inside of the showcase can be easily looked into. Further, as an example, a hot dog is served as a commodity after heating up it to around 60°C under a dry condition in a heating receptacle like a showcase that is placed near the cashier of the convenience store so that the inside of the showcase can be easily looked into.

As described above, the moisture content of the served Chinese style steamed bun is different from that of the served hot dog, and the humidity in the receptacle for the Chinese style steamed bun is different from that in the receptacle for the hot dog. Therefore, it is difficult to heat up plural kinds of food products that need to be heated up item by item under different moisture conditions, in a single receptacle. As a result, a convenience store or the like has to prepare more than one receptacles in order to serve multiple kinds of food products having different required moisture contents. Therefore, the store or the like needs a larger floor space. When the store cannot afford the space, the store is obliged to limit the number of the commodity items.

Further, in the conventional way, a food product such as the Chinese style steamed bun or the hot dog cannot be preserved in a re-heating receptacle for a long time since the quality and the commercial value of the food product is so deteriorated that it cannot be served as a commodity. That is, the taste or texture of the food product such as the Chinese style steamed bun or the hot dog is seriously spoiled in the heating receptacle because the product in the receptacle is excessively exposed to the dry or dump atmosphere.

Further, according to the conventional heating or defrosting manner by use of the heating receptacle as described above, the taste of the food is deteriorated due to aroma transpiration. Further, scent-cling phenomena can be caused between different kinds of frozen foods in a common food receptacle when the foods transpire different kinds of aroma. Moreover, a food may absorb the off-flavor from another food in the receptacle. Thus, the commodity value of the food is spoiled. In a case of extreme absorption of the off-flavor, the food cannot be served as a commodity.
In addition, when the receptacle is opened and closed so as to serve the commodity, the product adulteration or the product contamination may be caused.

In order to solve the problems as described above, the patent reference 1 discloses a method for defrosting the food, in which the food after being frozen is almost (or substantially) air-tightly packed with a space around the frozen food in the package enclosure, so that the food packed under the packing condition is warmed up by use of a warm breeze of approximately 40°C or more at least during a part of defrosting step, and the temperature of the warm breeze is rapidly lowered in order that the surface temperature is maintained under a temperature condition not exceeding 25°C.

In addition, the patent reference 2 discloses a food defrosting method including the steps of packing a frozen cooked food and a steam generating substance in a package so that the package is sealed or substantially sealed, and re-heating the food under the packaged condition, so that the food is steamed by use of the steam which is generated from the steam generating substance.

The patent references quoted above are as follows:
Patent Reference 1 is JP1999-98974;
Patent Reference 2 is JP2001-292708.

### DISCLOSURE OF THE INVENTION

### Subjects to be solved

However, according to the method of the reference 1, it is difficult to defrost a heated and cooked food under a required condition, for example, under a steam atmosphere condition or under a dry condition in response to the desirable moisture content of the food. Thus, the texture of the food after being defrosted is still a subject to be solved.
Further, the defrosted food is eaten at a place of a room temperature around 25°C. Accordingly, the defrosting method of the reference 1 is not effective in heating, re-cooking, sterilizing, or incubating (heat insulating). In addition, the method is not effective in serving a hot food.
On the other hand, according to the method of the reference 2, a steam generating substance is needed per each heated-and-cooked food product. Accordingly, much expense in time and effort is required.
Moreover, although either of the methods according to the references 1 and 2 relates to defrosting or warming procedure for a frozen cooked food, either of them cannot be applicable to a chilled cooked food.

Thus, as described above, in view of the conventional subjects to be solved, the present invention aims at providing a chilled product or a frozen product of a heated and cooked food that is preserved in a chilled or frozen condition over a long time, the food being able to be defrosted, re-heated, re-cooked, pasteurized, and incubated according to the water (moisture) content to be required for the food. The present invention also aims at providing multiple kinds of the chilled products or frozen products of the heated and cooked foods that are preserved in a chilled or frozen condition over a long time can be defrosted, re-heated, re-cooked, pasteurized, and incubated simultaneously in a common temperature atmosphere according to their own item-by-item moisture content conditions, even when the to-be-desired moisture conditions are different among the food products.
Further, The present invention also aims at providing a method as well as a device (system) for preserving the chilled or frozen product of the heated and cooked food.

### Means to solve the problem

In order to overcome the above-described difficulties, the present invention discloses a chilled or frozen product of a heated and cooked food provided with at least one topping, the heated and cooled food being produced by,
adding an inflating agent to a dough of the food, including air bubbles or adding yeast in the dough, and fermenting the dough,
baking the dough so as to produce the base of the heated and cooked food, and
providing the base of the food with the topping:
wherein the heated and cooked food is cooled while or after being sprayed with water, or sprayed with water after the food is frozen; and then,
the chilled or frozen product of the heated and cooked food is wrapped in a sealed or substantially sealed condition.
As the examples of the heated and cooked foods, a hot dog, a pizza, a twice-heating food product and so on can be cited. In a case where the heated and cooked food is the hot dog, the base of the food is bread and the toppings are sausages. In a case where the heated and cooked food is a pizza, the base of the food is pizza-dough and the toppings are several kinds of ingredients such as sausages, cheese, vegetables or meat. Further, when the heated and cooked food is a twice-heating food product, the base of the food is starch syrup as the ab initio dough of the food and the topping is cream.

The heated and cooked food just after being heated and cooked is generally cooled to a temperature level within 20 to 30°C by dissipating the moisture inside the food out of the surface of the food by a process of what they call a rough heat removing step. For instance, in the case of the hot dog, the bread as the base that has been just fermented and baked is too hot to slit open the back of the bread in order to place the sausages in the slit. Thus, the steps of topping and slitting-open-back are performed after the rough heat is removed. Further, in the case of the pizza, the step of topping can be performed even when the base is hot. The topping step may be performed before the rough heat-removing step, or during the dough preparation step and before the baking step.
In the rough-heat removing step, the latent heat of vaporization removes the heat of the heated cooked food, and the food is gradually cooled. The water vaporization continues even when the temperature of the food surface get closer to the ambient air temperature, so long as the former temperature is higher than the latter temperature and the dissipation heat is supplied from the inside of the food. In addition, when the vapor pressure inside the food is higher than the ambient vapor pressure, the water vaporization continues. Moreover, the water vaporization also occurs when the food is frozen.

It is considered that the bread, for instance, is most delicious when the bread is eaten with the (moisture) content ratio of the food being a condition that the bread is cooled to a temperature level around 35°C.
On the other hand, in freezing the food, because of the water vaporization, the (moisture) content ratio is lowered below a (moisture) content level in the most delicious condition as to the food. Therefore, water is sprayed toward the food so that the water content ratio can be kept at the water content level in the most delicious condition. Then, the food is wrapped in a sealed or substantially sealed condition in order that the water content ratio of the most delicious food condition is kept in the wrapping.

On the other hand, by spraying water toward the heated and cooled food that is provided with the topping as well as the heated and cooled food that is included with the ingredient and baked, the water sprayed toward either of the heated and cooked foods that have been frozen forms a thin layer of ice that surrounds the either of the foods so as to attain a sufficiently high coverage ratio of the ice layer over the whole surface of the food, as soon as the sprayed water comes in contact with the food.

When the frozen product of the heated and cooked food formed as described is warmed and re-heated/re-cooked, the most delicious condition of the food is obtained. The water spraying amount may be adjusted depending on the kind of the food so that the water content of the food attains the most delicious condition of the wrapped food.

Further, the present invention discloses a chilled or frozen product of a heated and cooked food which is produced by adding an inflating agent to the dough of the food, including air bubbles in the dough or adding yeast in the dough, fermenting and then steaming the dough:
wherein the heated and cooked food is cooled while or after being sprayed with water, or sprayed with water after the food is frozen; and then,
the chilled or frozen product of the heated and cooked food is wrapped in a sealed or substantially sealed condition.
Steamed bread, a Chinese style steamed bun, a Chinese snack such as a steamed meat dumpling or chaotzu, a hot snack such as yakitori (grilled chicken), grilled slice of meat, a meatball or a fish ball is listed, as an example of the above-disclosed heated and cooked food. Further, the food may involve at least one ingredient as is the case with the Chinese style steamed bun.

In the case of the Chinese style steamed bun, for instance, it is considered that the food is most delicious when the water (moisture) content ratio of the food is the moisture content of the condition where the food is on a time point corresponding to a temperature of 90°C during the rough heat removal process (step). As the heated and cooked food is cooled and frozen, the water (moisture) contained in the food dissipates outside through the surface of the food, thus the water (moisture) content ratio of the food is lowered below the water (moisture) content ratio level of the most delicious condition, if the food is simply cooled or frozen. Therefore, by spraying water toward the heated and cooked food and wrapping the food with additional water (moisture) in a sealed or substantially sealed condition, the inside of the wrapping can contain the water amount of the most delicious condition.

Moreover, the heated and cooked food is cooled with water sprayed or after water has been sprayed. The water amount that roughly corresponds to the water dissipation out of the food during the rough heat removal step can be sprayed on the surface of the food. As a result, the water dissipation out of the food can be restrained (or compensated). In addition, as the sprayed water also vaporizes while cooling the heated and cooled food by the latent heat of vaporization, the power needed for a mechanical cooling means that cools the food can be reduced.

Further, regarding the chilled or frozen product, the present invention discloses a method for preserving a heated and cooked food provided with at least one topping, comprising the steps of:
heating and cooking a dough of the food after adding an inflating agent, including air bubbles or adding yeast and fermenting, so as to produce a base of the heated and cooked food;
providing the topping on the base of the food so as to form the heated and cooked food; and
preserving the heated and cooked food after being provided with the topping in a chilled or frozen condition:
   wherein the method further comprises the steps of,
   after the step of providing the topping, cooling the heated and cooked food while or after the food is sprayed with water, or spraying the food with water after the food is frozen, and
preserving the heated and cooked food in the chilled or frozen condition in the step of preserving the heated and cooked food.
As the examples of the heated and cooked foods, a hot dog, a pizza, a twice-heating food product and so on can be cited. In the case where the heated and cooked food is the hot dog, the base of the food is bread and the toppings are sausages; in the case where the heated and cooked food is a pizza, the base of the food is pizza-dough and the toppings are several kinds of ingredients such as sausages, cheese, vegetables or meat. Further, when the heated and cooked food is a twice-heating food product, the base of the food is starch syrup as the ab initio dough of the food and the topping is cream. In addition, in the case of the pizza, the pizza-dough may be baked after the toppings are included in the dough.

It is considered that the bread, for instance, is most delicious when the bread is eaten with the (moisture) content ratio of the food being a condition that the bread is cooled to a temperature level around 35°C.
On the other hand, in freezing the food, because of the water vaporization, the (moisture) content ratio is lowered below a (moisture) content level in the most delicious condition as to the food. Therefore, water is sprayed toward the food so that the water content ratio can be kept at the water content level in the most delicious condition. Then, the food is wrapped in a sealed or substantially sealed condition in order that the water content ratio of the most delicious food condition is kept in the wrapping.

On the other hand, by spraying water toward the heated and cooled food that is provided with the topping as well as the heated and cooled food that is included with the ingredient and baked, the water sprayed toward either of the heated and cooked foods that have been frozen forms a thin layer of ice that surrounds the either of the foods so as to attain a sufficiently high coverage ratio of the ice layer over the whole surface of the food, as soon as the sprayed water comes in contact with the food.

Further, the present invention discloses the method for preserving the heated and cooked food preserved according to the above-described step [in the paragraph 0019] of preserving the food, the method further comprises the steps of:
wrapping the heated and cooked food that is preserved in a condition as per the above-described step of preserving the food, in a sealed or substantially sealed condition;
warming the wrapped food up to a temperature that exceeds the temperature where starch starts gelatinizing and within a temperature range of pasteurization, so that the food is kept at the temperature; and
keeping the food at the warmed temperature.

By warming and storing the food in a sealed or substantially sealed condition as described above, the water included in the wrapped food can be prevented from evaporating outside of the wrapping. Further, the food can be heated under a water content condition where the food can be most delicious.
Further, by warming the food over the temperature at which the starch content begins gelatinizing, the food is placed under a re-heated/re-cooked condition where the texture and taste of the food can be further enhanced.
In addition, by warming the food in a temperature zone of pasteurization, the sterilization effect can be achieved; as a result, the safe for the food is enhanced.

It is hereby noted that the most suitable temperature for warming or preserving (incubating) differs from a food kind to a food kind. In general, the temperature is supposed to be 60 to 75°C. If the warming or preserving temperature is lower than 60°C, the gelatinizing of the starch does not start and the enhancement in the texture and taste of the food cannot be expected. If the temperature is more than 75°C, the heated and cooked food becomes stiff and the texture is spoiled.

In addition, the time span needed for the pasteurization depends on the temperature at which the pasteurization is performed. For instance, the time span is 120 to 140 minutes, if the pasteurization temperature is 60°C, and the time span is 2 to 3 minutes, if the pasteurization temperature is 75°C.

The heated and cooked food preserved in the preserving condition as described can be served so that the customer can eat the food immediately.
The food is served after having been preserved for a time span needed for the pasteurization of the food.

Further, the present invention discloses a method for preserving a heated and cooked food, comprising the steps of;
adding an inflating agent to a dough of the food, including air bubbles or adding yeast in the dough and fermenting the dough,
steaming the dough so as to form the heated and cooked food,
cooling the steamed food,
preserving the cooled food in a chilled condition, or in a frozen condition after the food has been passed through a freezing means; and
wrapping the food in a chilled or frozen condition:
   wherein, the method further comprises the steps of;
spraying the mist of water on the food before the steps of steaming and after the step of cooling, during the step of cooling, or after the step of freezing and before the step of wrapping, and
preserving the heated and cooked food in the step of preserving the food under a chilled or frozen condition.
Steamed bread, a Chinese style steamed bun, a Chinese snack such as a steamed meat dumpling or chaotzu, a hot snack such as yakitori (grilled chicken), grilled slice of meat, a meatball or a fish ball is listed, as an example of the above-disclosed heated and cooked food. Further, the food may include at least one ingredient, as is the case with the Chinese style steamed bun.

In the case of the Chinese style steamed bun, for instance, it is considered that the food is most delicious when the water content ratio of the food is that of the condition where the food is on a time point that corresponds to a temperature of 90°C during the rough heat removal process. However, as the heated and cooked food is cooled and frozen, the water contained in the food dissipates outside through the surface of the food. Thus, the water content ratio of the food is lowered below the water content ratio level of the most delicious condition due to the water dissipation, if the food is simply cooled or frozen. By spraying water toward the heated and cooked food, the food can contain the water amount of the most delicious condition.

Moreover, by cooling the heated and cooked food while or after the food is being sprayed with water, the water amount that roughly corresponds to the water dissipation amount out of the food during the rough heat removal can be sprayed on the surface of the food. As a result, the water dissipation out of the food can be restrained. In addition, the sprayed water also vaporizes while cooling the heated and cooled food by the latent heat of vaporization. Thus, the power needed for a mechanical cooling means that cools the food can be reduced.

Further, the present invention discloses the method for preserving a the heated and cooked food preserved according to the above-described step [in the paragraph 0027] of preserving the food, the method further comprises the steps of:
wrapping the heated and cooked food that is preserved in a condition as per the above-described steps, in a sealed or substantially sealed condition;
warming the wrapped food up to a temperature that exceeds the temperature where starch starts gelatinizing and is within a temperature range of pasteurization; and
keeping the food at the warmed temperature.

Further, as a device invention, the present invention discloses a device for preserving a heated and cooked food (provided with at least one topping), comprising:
a heating and cooking means that bakes a dough of the food after adding an inflating agent, including air bubbles or adding yeast and fermenting, so as to form the base of the food;
a topping means that provides the baked base of the food with the topping so as to form the heated and cooked food;
a storage means that preserves the heated-and-cooked food which is baked and provided with the topping, in a chilled or frozen condition;
wherein, at the upstream of the storage means, the device for preserving the food is provided with:
a cooling means that cools the heated and cooked food or a freezing means that freezes the heated and cooked food after the food is cooled; and
a water mist spraying means that sprays the mist of water toward the cooled or frozen food.

Further, the present invention discloses the device for preserving the heated and cooked food preserved by use of the above-described storage means [in the paragraph 0031] of preserving the food, the device further being provided with:
a wrapping means that wraps the heated and cooked food preserved in the storage means in the claim 12 or 13, in a sealed or substantially sealed condition; and
a heater that is able to warm and incubate the wrapped heated-and-cooked food, in which the wrapped heated-and-cooked food is warmed up to a temperature that exceeds the temperature where the starch contained in the food starts gelatinizing and is within a temperature range of the pasteurization for the food, so that the food is kept at the to-be-kept temperature.
In this way, the heated and cooked food is wrapped in a sealed or substantially sealed condition, before the food is re-heated/re-cooked.
Thus, the water content and the flavor of the wrapped food are prevented from leaking outward. Further, the food can be prevented from absorbing the off-flavor from other kind of heated and cooked food even if there are the other kinds of foods. Accordingly, several kinds of heated and cooked foods can be simultaneously warmed and preserved in a common-use heater.

Further, the present invention discloses the device for preserving the heated and cooked food, wherein a heater is of an air circulating type and is able to circulate the air therein, so as to control the temperature therein to warm and incubate the heated and cooked food.
For instance, an electric heater (such as uses a hot wire) as a heat source of the heater is used, to warm the food with warm air circulation, without heat radiation or heat transfer by contact with a hot solid body. As a result, the elements or members in the heater are, in a sequence of hot to cool members, the electric heater (a hot wire), the air inside the heater, the wrapping enclosure surface, the air inside the wrapping enclosure, the surface of the heated and cooked food and the inside of the food. In this way, the temperature gradient inside the heater from the electric heater (the hot wire) to the food can be restrained. Further, the water vapor pressure levels at the enclosure inner surface, at the surface of the food, and inside of the food are almost kept at a constant level. On the other hand, the difference between the temperature at the inner surface of the wrapping enclosure and the temperature of the air inside the wrapping enclosure is small. Thus, the water condensation at the inner surface of the wrapping enclosure can be prevented. Therefore, the desirable water content ratio at which the food can be felt delicious is obtained.
On the other hand, in a case where the wrapped heat-and-cooked food is warmed by means of heat radiation or contact heat transfer, the temperature inside the food becomes higher than the temperature of the air inside the heater. Thereby, the water vapor dissipated from the food condenses to liquid water onto the inner surface of the wrapping enclosure. Thus, the water content in the food is lost and the taste of the food is spoiled.

Further, the present invention discloses the device for preserving the heated and cooked food according to the above disclosure [the paragraphs 0032/0033], the device also acting as an means for improving the taste and texture and further comprising a baking means that is placed at an adjacent location of the heater and bakes the heated-and-cooked food after the wrapping of the food is removed the food which has been preserved as per the preserving step of the above disclosure; and the waste heat generated by the baking means, during the time span where the baking means bakes the heated and cooked food is used as a part of the heat source of the heater.
In this way, by baking (re-cooking) the heated and cooked food, the texture and the taste of the food are improved. Further, by placing the baking means at an adjacent location of the heater, the space of the store can be saved. In addition, the use of the wasted heat of the baking means as a part of the heat source for the heater can reduce the energy needed for the heater.

Further, the present invention discloses a device for preserving a heated and cooked food, comprising:
a heating and cooking means that steams a dough of the food, after adding an inflating agent, including air bubbles or adding yeast in the dough and then fermenting the dough, so as to form the heated and cooked food;
a cooling means that cools the steamed heated-and-cooked food;
a storage means that preserves the cooled heated-and-cooked food in a chilled condition, or in a frozen condition after the food is frozen by a freezing means;
wherein, the device further comprises:
a water mist spraying means that sprays the mist of water toward the
cooked-and-heated food after the food is steamed and before the food is cooled, while the food is being cooled, or after the food is frozen.
Water is preferably sprayed toward the heated and cooked food before the food is frozen, in a case where the moisture in the food is apt to dissipate outside of the food, whereas water is preferably sprayed toward the heated and cooked food after the food is frozen, in a case where the moisture in the food is hard to dissipate outside.

Further, the present invention discloses the device for the heated and cooked food preserved according to the above-described step of preserving the food, the device further comprising:
a wrapping means that wraps the heated and cooked food preserved in
the storage means described above, in a sealed or substantially sealed condition, and
a heater that is able to warm and incubate the wrapped
heated-and-cooked food:
wherein the heated and cooked food wrapped by the wrapping means is warmed up to a temperature that exceeds the temperature where the starch contained in the food starts gelatinizing and is within a temperature range of the pasteurization for the food, so that the food is kept at the to-be-kept temperature.

### EFFECTS OF THE INVENTION

As described thus far, the present invention can provide chilled products or frozen products of heated and cooked foods that are preserved in a chilled or frozen condition over a long time can be warmed and defrosted, re-heated, re-cooked, pasteurized, and incubated, simultaneously in a common temperature atmosphere, even when the to-be-desired moisture conditions are different among the food products. Further, the present invention can also provide a method and an apparatus for preserving the chilled or frozen product of the heated and cooked food.

### BRIEF DESCRIPTION OF THE DRAWINGS

Fig. 1 shows an outline configuration of a preserving device of a heated and cooked food according to a first embodiment.
Fig. 2 shows an outline configuration of a preserving device of a heated and cooked food according to a second embodiment.
Fig. 3 shows a perspective view of a heater that is used as a re-cooking device.
Fig. 4 shows a perspective view of another heater that is used as a re-cooking device, being different from the heater depicted in Fig. 3.

### DETAILED DESCRIPTION OF THE PREFERRED EMBODIMENTS

Hereafter, the present invention will be described in detail with reference to the embodiments shown in the figures. However, the dimensions, materials, shape, the relative placement and so on of a component described in these embodiments shall not be construed as limiting the scope of the invention thereto, unless especially specific mention is made.

### First Embodiment

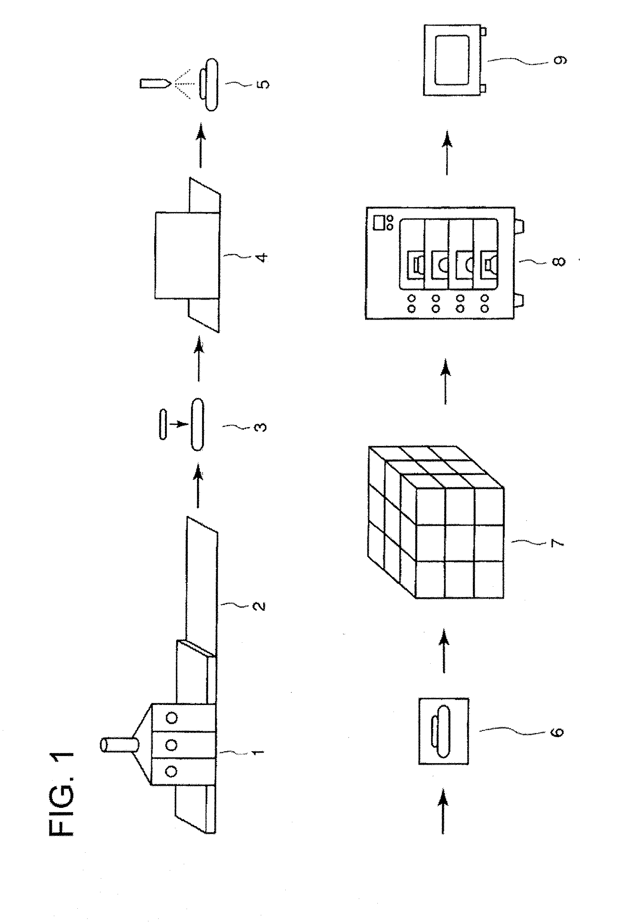

Fig. 1 shows an outline configuration of a preserving device of a heated and cooked food according to a first embodiment. In the first embodiment, as an example of a heated and cooked food, a hot dog is considered. However, a heated and cooked food other than this example may be considered as an application according to the first embodiment, so long as the heated and cooked food is formed through the following consecutive steps of:
adding an inflating agent in the dough of the food, including air bubbles in the dough, or adding and fermenting yeast in the dough;
baking the dough so as to form the base of the food;
providing at least one topping or including at least one ingredient on or in the baked dough. For instance, this example can be applicable to a pizza or a twice-heating food product.

A preserving device for storing the heated and cooked food according to this first embodiment fundamentally is composed of a heating and cooking means 1 that produces the base, namely bread of the heated and cooked food, a cooling means 2 that cools the bread produced by the heating and cooking means 1, a topping means 3 that provides sausages as toppings on the bread so as to make a hot dog, a freezing means 4 that freezes the hot dog, a mist spraying means 5 that sprays water toward the frozen hot dog, a wrapping means 6 that wraps the hot dog (having been) sprayed with water, a frozen-food storage means 7 that stores the wrapped hot dog in a frozen condition, a re-cooking means 8 that warms and incubates the hot dog stored in the frozen condition, and a baking means 9 that bakes the surface of the warmed and incubated hot dog.

In the next place, an explanation is now given as to the flow of the functions of the preserving device according to the first embodiment for preserving the heated and cooked food, based on Fig. 1 as well as the concrete function of each means in Fig. 1.
Bread dough that is the raw material of bread (as the base of the hot dog) is put into the heating and cooking means 1. At this step 1 of heating and cooking, the bread dough is warmed so as to ferment the dough with yeast. Then, the dough is baked, to become the bread.
The bread produced at the step 1 of heating and cooking is transferred to the cooling means 2 where the bread is cooled. The cooling means 2 may be a mechanical cooling means, or a means that only removes the rough heat of the to-be-cooled subject. As to the cooling temperature, it may be less than a temperature at which the bread (the base of the hot dog) can be given a back split into which at least one sausage as the topping is placed; except this point, there is no peculiar limiting condition as to the cooling temperature. In the step of topping for the heated and cooked food, for example in a case of topping for pizza, it may be unnecessary to slit open the back of the food, and the cooling means can be dispensed with. However, it is preferable to provide the cooling means 2 in order to control the evaporation of the water within the food.

The bread cooled in the cooling means 2 is transferred to the topping means 3 where the bread is given a back split into which the sausage is placed.
The hot dog that is formed by the topping means 3 where the sausage is placed in the back split of the bread is frozen in the next step, namely in the freezing means 4.

The hot dog frozen at the freezing means 4 is sprayed with water in mist by the mist spraying means 5, where the hot dog is moved by a transfer means such as a conveyor at a constant speed, so that the hot dog is sprayed with a predetermined amount of water during a predetermined time span, from a location apart from the transfer means by a predetermined distance. In this way, when the hot dog has a regular height, the water amount and particle size of the mist sprayed on the hot dog are kept constant. In addition, whether or not the mist water amount is at a prescribed constant level is confirmed through a sampling check as required.
It is preferable that the height of the mist spraying nozzle arrangement as well as the height of the hot dog is monitored by use of such an apparatus as an electric eye. It is also preferable that the transfer speed of the hot dog is monitored by use of such an apparatus as a speed meter and an encoder. Watching the change in the mist spraying condition permits detecting a deviation from the constant mist spraying amount.

The hot dog sprayed with water in mist at the mist spraying means 5 is wrapped in a sealed or substantially sealed condition, by the wrapping means 6. Then, the hot dog is stored in the frozen food storage means 7. The procedure of freezing at the freezing means 4 may be omitted and the frozen food storage means 7 may be used as a chilled-food storage means. Namely, a hot dog produced at the topping means may be cooled, sprayed with mist, and stored in a chilled condition.
Whether or not the heated and cooled food such as a Chinese style steamed bun is put under a frozen condition after being chilled is arbitrarily determined in response to the to-be-stored time duration of the food, the initial investment expenditure of the facility and so on.

The hot dog frozen and stored at the frozen food storage means 7 is transferred to a re-cooking means 8.
In this first embodiment, the re-cooking means 8 is explained as a means such as a heater of a showcase style and a see-through configuration the heater which is used, for example, near the entrance or the cashier of a convenience store. However, the application of the embodiment is not limited within the example, so long as a re-cooking means 8 satisfies the heating and incubating temperature conditions.

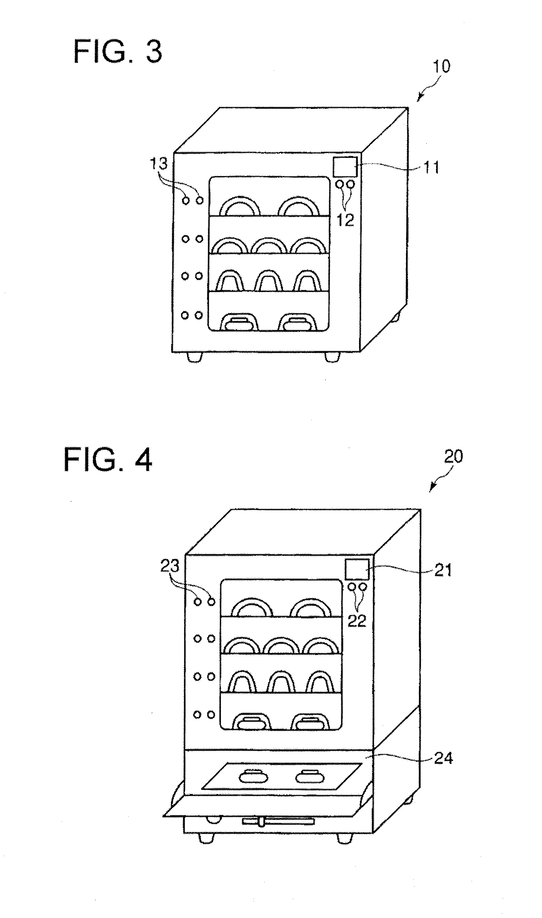

Fig. 3 shows a perspective view of a heater 10 that is used as the re-cooking means 8. The heater 10 is provided with a plurality of racks where the heated and cooked food is placed (4 stage racks in this embodiment [in Fig.3]). The heater 10 in this embodiment is a heater where the food is warmed by warm air circulation in the heater so that the air temperature distribution in the heater 10 can be uniform. In this way, the temperature of the packaged articles wrapped together with the hot dog can be uniform, the condensation of the water (moisture) content included in the packaged hot dog can be prevented from being formed; further, the hot dog can be heated under a water (moisture) content condition where the hot dog can be most delicious.
In addition, the heater 10 is provide with a temperature controller 11 (Fig.3) that controls the temperature of the warm air circulation generated by a warm air circulation means (not shown) in the heater 10, so as to keep the temperature at a constant level. So long as the warming and preserving temperature is over a gelatinization temperature at which starch begins to gelatinize as well as within a temperature zone in which pasteurizing of the food can be performed, there is no special limiting condition as to the warming and preserving temperature. A temperature in a range from 60 to 75°C is preferable.
Further, each rack in the heater 10 is provided with an elapsed time display lamp system 13 that is connected to a timer which counts the elapsed time after the food is placed on the rack and the timer is set, the lamp system 13 comprises a first lamp and a second lamp. The indication of the first lamp notifies that the food on the rack should not be retrieved out of the heater, if the elapsed time after the timer setting does not reach a predetermined time. The indication of the second lamp notifies so, if the elapsed time after the timer setting reaches the predetermined time.

The hot dog frozen and stored at the frozen food storage means 7 is placed in the heater 10 where the temperature is kept constant by the temperature controller 11. When the hot dog is placed on the rack corresponding to the hot dog, the timer connected to the lamp system 13 is set to give the predetermined elapse time as a time that is needed for pasteurizing the hot dog. For instance, in a case where the inside temperature of the heater 11 is set at 60°C, the elapsed time is 120 to 140 minutes.
In a case where the inside temperature of the heater 11 is set at 72°C, the elapsed time is 2 to 3 minutes.
In other words, if the first lamp of the elapsed time display lamp system 13 is lit, it is meant that the re-cooking and pasteurizing are not accomplished. If the second lamp is lit, it is meant that the re-cooking and pasteurizing are accomplished so that the hot dog is kept at the storage temperature for incubating the hot dog.
Moreover, when the freshness date of the hot dog is expired, the first lamp of the elapsed time display lamp system 13 is lit so as to indicate a caution that the hot dog cannot be served. In this connection, if another color of the lamp is prepared, then it becomes further easier to judge whether the lamp indicates that the hot dog is under a re-cooking condition or in a state out of the freshness expiration limitation.
When the elapsed time display lamp system 13 indicates that the hot dog is retrievable, the hot dog can be taken out from the heater 10 and served.
Since the warming and storing procedure as described above is performed for the hot dog wrapped in a sealed or substantially sealed condition, the condensation of the moisture included in the wrapped hot dog can be prevented from being evaporated outside of the wrapping. Further, the hot dog can be heated with a desirable condition of water content where the hot dog can be most delicious.

Further, the heated and cooked food that is heated and incubated in the heater 10 can be baked in the baking means 9 on the customer's request, so that the surface of the hot dog is baked and the customer can eat the hot dog according to her or his taste.

Fig. 4 shows a perspective view of a heater 20 different from the heater 10 depicted in Fig. 3 and can be used as a re-cooking means (a variation of the this first embodiment). The heating means part of the heater 20 is similar to the heater 10 in Fig. 3. However, the heater 20 is provided with a baking means part 24 at the lower side of the heater 20. Namely, the heater 20 is integrated with the baking means part 24. By using such heater 20, a convenience store does not have to prepare a heating means and a baking means independently thereby each of the two means does not need to be placed in an independent space. Thus, the increase as to the footprint of the convenience store can be evaded. Further, by transferring the waste heat from the baking means part 24 toward the heating means part, the waste heat can be made effective use of, as a part of heat source. Thus, the necessary power for circulating warm air in the heater 20 can be reduced.

By preserving the heated and cooked food (the hot dog) as described, the food can be warmed according to the required water (moisture) content of the food even in a case where the food has been preserved in a freezing temperature zone for a long duration of time. Further, the food can be re-heated and incubated together with other multiple heated/cooked foods of different re-heating conditions in a common temperature atmosphere.

Further, in this first embodiment, the hot dog is sprayed with the mist of water by the mist spraying means 5, after the hot dog is frozen by the freezing means 4, and then wrapped. However, the hot dog may be wrapped after being preserved in a frozen condition, and before being warmed and incubated.

Further, the wrapping can be classified into two categories. One is an individual food wrapping that is performed per each heated and cooked food while the other is a multiple-foods wrapping that is performed per a plurality of (heated and cooked) food units. In a case where the multiple heated and cooked food units are together wrapped in a wrapping, the individual food wrapping is selected if there is an apprehension that the surface of each food is separated from the food body or the shape of the food is deformed due to the contact between the food units in the wrapping. In other cases, the selection out of the wrapping categories may be made eventually according to the serving style of the food at a convenience store and the like. The multiple-foods wrapping can be cost-effectively performed in comparison with the individual food wrapping, in general. Accordingly, the multiple-foods wrapping is preferable, in a case where many units of the food is supposed to be served at a time as well as in a case where the food unit out of the multiple-foods wrapping can be re-wrapped into the individual wrapping style just before the heated and cooked food is re-heated (incubated) in the convenience store.

### Second Embodiment

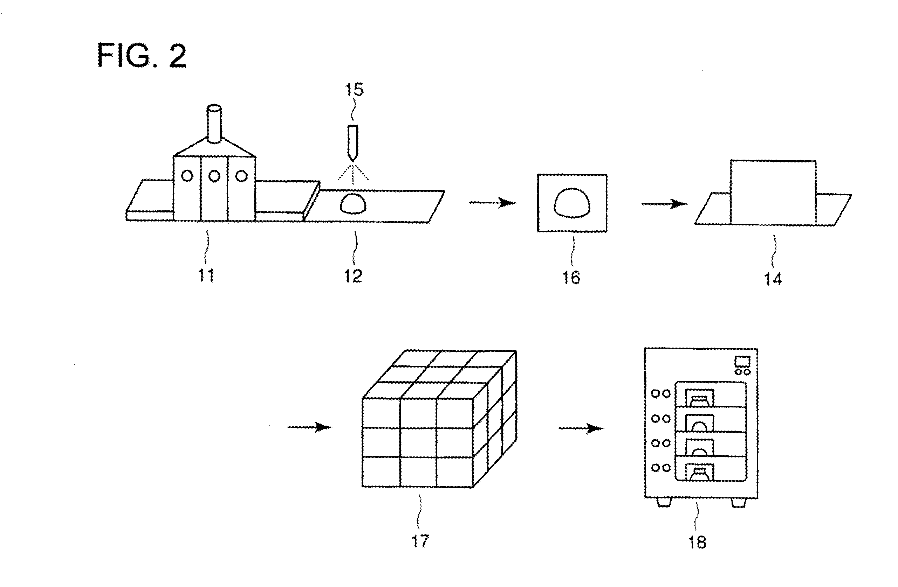

Fig. 2 shows an outline configuration of a storage (preserving) device of a heated and cooked food according to a second embodiment. In the second embodiment, as an example of a heated and cooked food, a Chinese style steamed bun is hereby considered. However, a heated and cooked food other than this example may be considered as an application according to the second embodiment, so long as the heated and cooked food is formed through the following consecutive steps of adding an inflating agent in the dough of the food, including air bubbles in the dough or adding and fermenting yeast in the dough, and steaming.
For instance, this example can be applicable to a Chinese style steamed bun, Chinese snacks (dim sum) such as a Chinese style steamed meat/sea food dumpling (chaotzu), hot snacks and the like. The heated and cooked food may include ingredients therein, as is the case with the Chinese style steamed bun.

A preserving device for preserving the heated and cooked food according to this second embodiment is fundamentally composed of a heating and cooking means 11 (Fig.2) that produces the Chinese style steamed bun, a cooling means 12 that cools the Chinese style steamed bun produced by the heating and cooking means 11, a mist spraying means 15 that sprays water in mist (the mist of water) toward the Chinese style steamed bun while or before the Chinese style steamed bun is cooled at the cooling means 12, a wrapping means 16 that wraps the Chinese style steamed bun after the Chinese style steamed bun is cooled and sprayed with the mist of water, a freezing means 14 that freezes the Chinese style steamed bun after the Chinese style steamed bun is wrapped, a frozen-food storage means 17 that stores the wrapped Chinese style steamed bun in a frozen condition, and a re-cooking means 18 that warms and incubates the Chinese style steamed bun.

In the next place, an explanation is now given as to the flow of the functions of the preserving device according to the second embodiment for preserving the heated and cooked food, based on Fig. 2 as well as the concrete function of each means in Fig. 2.
The dough that is the material of the Chinese style steamed bun is put into the heating and cooking means 11. At this step 11 (or means 11) of heating and cooking, the dough is warmed. An inflating agent is added in the dough, air bubbles are included in the dough, or yeast is added in the dough to ferment the dough. Then, the dough is steamed and the Chinese style steamed bun like a sponge (cake) is produced.
The Chinese style steamed bun produced at the step 11 of heating and cooking is transferred to the cooling means 12 where the Chinese style steamed bun is cooled. The cooling means 12 may be a mechanical cooling means, or a means that only removes the rough heat of the to-be-cooled subject. There is no peculiar limiting condition as to the cooling temperature.

The Chinese style steamed bun transferred to the cooling means 12 is sprayed with the mist of water by the mist spraying means 15 while or before the Chinese style steamed bun is cooled at the cooling means 12.
The mist spraying means 15 that sprays the mist of water toward the Chinese style steamed bun while or before the Chinese style steamed bun is cooled at the cooling means 12. While a conveyor or the like transfers the Chinese style steamed bun at a constant speed, so that the Chinese style steamed bun sprayed with a predetermined amount of water during a predetermined time span, from a location apart from the transfer means by a predetermined distance. In this way, when the Chinese style steamed bun has a regular height, the water amount and particle size of the mist sprayed on the Chinese style steamed bun are kept constant. In addition, whether or not the mist water amount is at a prescribed constant level is confirmed through a sampling check as required.
It is preferable that the height of the mist spraying nozzle arrangement as well as the height of the Chinese style steamed bun is monitored by use of such an apparatus as an electric eye. It is also preferable that the transfer speed of the Chinese style steamed bun is monitored by use of such an apparatus as a speed meter and an encoder. In this way, watching the change in the mist spraying condition permits detecting a deviation from the constant mist spraying amount.

The Chinese style steamed bun cooled at the cooling means 12 is wrapped in a sealed or substantially sealed condition, by the wrapping means 16; then, the Chinese style steamed bun is frozen by the freezing means 14, and stored in the frozen-food storage means 17.
In this second embodiment, the Chinese style steamed bun is cooled, sprayed with the mist of water, and wrapped, to be frozen and stored in the storage means. However, the freezing means 14 may be dispensed with. Namely, the bun is not frozen but chilled (cooled) by the frozen-food storage means 17. The frozen-food storage means 17 may be used as a chilling and storing means. In other words, the Chinese style steamed bun produced at the step 11 of heating and cooking may be chilled and stored after the bun is cooled, sprayed with the mist of water, and wrapped.
Whether or not the heated and cooled food such as a Chinese style steamed bun is stored under a chilled or frozen condition is arbitrarily determined in response to the to-be-stored time duration of the food, the initial investment expenditure of the facility and so on.

The Chinese style steamed bun chilled and stored at the storage means 17 is transferred to the re-cooking means 18. As the re-cooking means 18, the heater 10 or 20 may be used, and the explanation as to the heaters 10 and 20 is omitted, as the explanation has been given in the description of the first embodiment.

The heaters 10 and 20 shown in Figs. 3 and 4 can store, warm and incubate the Chinese style steamed bun in this second embodiment and the hot dog, at the same time. Further the heaters treat with other different kinds of heated and cooked foods. Thus, the arrangement of the heaters in a convenience store can contribute to the space savings for the store.

By preserving the heated and cooked food (the Chinese style steamed bun) as described, the food can be warmed with the required water contents of the food even in a case where the food has been preserved in a freezing temperature zone for a long duration of time. Further, the food can be re-heated and incubated together with other multiple heated/cooked foods of different re-heating requisites in a common temperature atmosphere.

Although the Chinese style steamed bun in this second embodiment is wrapped before the steamed bun is frozen by the freezing means 14 in the second embodiment, the steamed bun may be wrapped after the steamed bum is frozen by the freezing means 14 and before the bun is stored in the storage means 17. Further, the steamed bun may be wrapped after the bun is stored in the storage means 17 and before the bun is warmed and incubated in the re-cooking means 18.
The location for wrapping the bun may be determined so that the condition of the bun in the wrapping can be restored to the condition of the initially heated-and-cooked bun, the bun being restored by the re-cooking means 18 that warms and incubates the bun.
For instance, in a case of treating with a food like jelly, water emerges from the food at the step of freezing. Therefore, the food is frozen in a tight wrapping condition without air space in the wrapping, or the food is wrapped in a frozen condition.
In a case of wrapping a packed lunch in which different height contents are filled here and air exists in the package, the packed lunch has to be slowly frozen, and some of the food contents therein cannot be restored even by re-heating, due to the irreversible property change of the food contents along the freezing process. Therefore, the packed lunch is wrapped after being frozen.

Further, a wrapping method can be selected from two categories. One is an individual food wrapping that is performed per each heated and cooked food while the other is a multiple-foods wrapping that is performed per a plurality of (heated and cooked) food units. The individual food wrapping is selected if there is an apprehension that the surface of each food is separated from the food body or the shape of the food is deformed due to the contact between the food units in the wrapping, in a case where the multiple heated and cooked food units are together wrapped in a wrapping. In other cases, the selection out of the wrapping categories may be made eventually according to the serving style of the food at a convenience store and the like. The multiple-foods wrapping can be cost-effectively performed in comparison with the individual food wrapping, in general. Accordingly, the multiple-foods wrapping is preferable, in a case where many units of the food is supposed to be served at a time as well as in a case where the food unit out of the multiple-foods wrapping can be re-wrapped into the individual wrapping style just before the heated and cooked food is re-heated in the convenience store.

Further, in this second embodiment, spraying the mist of water on the steamed bun is performed at a location (as well as in a time span) where the steamed bun has heat energy before the bun is cooled or while the bun is being cooled. In such a case as this, it may be caused that the water content in the bun transpires because of the ample heat accumulated in the bun, even though the mist of water sprayed on the steamed bun prevents a part of the water in the bun from dissipating outside of the bun. It may be preferable that the mist of water is re-sprayed after the step of cooling and before the step of freezing, or after the step of freezing and before the step of storing and re-cooking.
In addition, in re-spraying the mist of water, the wrapping means 16 has to be arranged on the downstream side of the mist re-spraying means.

### Industrial Applicability

The present invention is applicable to a chilled product or a frozen product of a heated and cooked food, being able to be warmed and defrosted, re-cooked, pasteurized, and incubated, depending on the water content to be required for the food, the heated-and-cooked food having been preserved in a freezing temperature zone for a long duration of time.
Further, the food can be re-heated and incubated together with other multiple heated/cooked foods of different re-heating requisites in a common temperature atmosphere.
The present invention also provides the method and device for preserving the chilled product or the frozen product as to the heated and cooked food; thus, the invention is industrially useful.

## Claims

1. A chilled or frozen product of a heated and cooked food provided with at least one topping, the heated and cooled food being produced by,
adding an inflating agent to a dough of the food, including air bubbles or adding yeast in the dough, and fermenting the dough,
baking the dough to produce a base of the heated and cooked food, and
providing the base of the food with the topping:
wherein the heated and cooked food is cooled while or after being sprayed with water, or sprayed with water after the food is frozen; and then,
the chilled or frozen product of the heated and cooked food is wrapped in a sealed or substantially sealed condition.

2. A chilled or frozen product of a heated and cooked food included with at least one ingredient, the heated and cooked food being produced by,
adding an inflating agent to a dough of the food, including air bubbles in the dough or adding yeast in the dough and fermenting the dough,
including at least one ingredient in the dough, and then
baking the dough included with the at least one ingredient in a case where the dough is added with the inflating agent or included with air bubbles, or baking the dough after the dough is fermented in a case where the dough is added with yeast:
wherein the heated and cooked food is cooled while or after being sprayed with water, or sprayed with water after the food is frozen; and then,
the chilled or frozen product of the heated and cooked food is wrapped in a sealed or substantially sealed condition.

3. A chilled or frozen product of a heated and cooked food which is produced by adding an inflating agent to the dough of the food, including air bubbles in the dough or adding yeast in the dough, fermenting and then steaming the dough:
wherein the heated and cooked food is cooled while or after being sprayed with water, or sprayed with water after the food is frozen; and then,
the chilled or frozen product of the heated and cooked food is wrapped in a sealed or substantially sealed condition.

4. A chilled or frozen product of a heated and cooked food which is produced by adding an inflating agent to a dough of the food, including air bubbles in the dough or adding yeast in the dough, fermenting the dough, including at least one ingredient in the dough, and then steaming the dough in a case where the dough is added with an inflating agent or included with air bubbles, or steaming the dough after the dough is fermented in a case where the dough is added with yeast and included with the ingredient:
wherein the heated and cooked food is cooled while or after being sprayed with water, or sprayed with water after the food is frozen; and then,
the chilled or frozen product of the heated and cooked food is wrapped in a sealed or substantially sealed condition.

5. A method for preserving a heated and cooked food provided with at least one topping, comprising the steps of:
heating and cooking a dough of the food after adding an inflating agent, including air bubbles or adding yeast and fermenting, so as to produce a base of the heated and cooked food;
providing the topping on the base of the food so as to form the heated and cooked food; and
preserving the heated and cooked food after being provided with the topping in a chilled or frozen condition:
wherein the method further comprises the steps of,
after the step of providing the topping, cooling the heated and cooked food while or after the food is sprayed with water, or spraying the food with water after the food is frozen, and
preserving the heated and cooked food in the chilled or frozen condition in the step of preserving the heated and cooked food.

6. A method for preserving a heated and cooked food included with at least one ingredient, comprising the steps of:
including the ingredient in a dough of the food after adding an inflating agent, including air bubbles or adding yeast and fermenting;
baking the dough in a case where the dough is added with an inflating agent or included with air bubbles, or baking the dough after the dough is fermented in a case where the dough is added with yeast, so as to form the heated and cooked food included with the ingredient; and
preserving the baked food after being included with the ingredient in a chilled or frozen condition:
wherein the method further comprises the steps of,
after the step of baking, cooling the heated and cooked food while or after the food is sprayed with water, or spraying the food with water after the food is frozen, and
preserving the heated and cooked food in the chilled or frozen condition, in the step of preserving the heated and cooked food.

7. The method for preserving the heated and cooked food according to claim 5 or 6, the method further comprises the steps of:
wrapping the heated and cooked food that is preserved in a condition as per the step of preserving the food in claim 5 or 6, in a sealed or substantially sealed condition;
warming the wrapped food up to a temperature that exceeds the temperature where starch starts gelatinizing and within a temperature range of pasteurization, so that the food is kept at the temperature; and
keeping the food at the warmed temperature.

8. The method for preserving the heated and cooked food according to claim 7, further comprising the step of:
baking the heated and cooked food preserved as per the preserving method of claim 7, after unwrapping the food, by use of a baking means.

9. A method for preserving a heated and cooked food, comprising the steps of;
adding an inflating agent to a dough of the food, including air bubbles or adding yeast in the dough and fermenting the dough,
steaming the dough so as to form the heated and cooked food,
cooling the steamed food,
preserving the cooled food in a chilled condition, or in a frozen condition after the food has been passed through a freezing means; and
wrapping the food in a chilled or frozen condition:
wherein, the method further comprises the steps of;
spraying the mist of water on the food before the steps of steaming and after the step of cooling, during the step of cooling, or after the step of freezing and before the step of wrapping, and
preserving the heated and cooked food in the step of preserving the food under a chilled or frozen condition.

10. A method for preserving a heated and cooked food included with at least one ingredient, comprising the steps of;
adding an inflating agent to a dough of the food, including air bubbles or adding yeast in the dough and fermenting the dough;
including the ingredient in the dough,
steaming the dough in a case where the dough is added with the inflating agent or included with air bubbles, or steaming the dough after fermented, in a case where the dough is added with yeast, so as to form the heated and cooked food included with the ingredient,
cooling the steamed food,
preserving the cooled food in a chilled condition, or in a frozen condition after the food has been passed through a freezing means (a freezing step), and
wrapping the food in a chilled or frozen condition:
wherein, the method further comprises the steps of;
spraying the mist of water on the food before the steps of steaming and after the step of cooling, during the step of cooling, or after the step of freezing and before the step of wrapping, and
preserving the heated and cooked food in the step of preserving the food under a chilled or frozen condition.

11. The method for preserving the heated and cooked food according to claim 9 or 10, the method further comprises the steps of:
wrapping the heated and cooked food that is preserved in a condition as per the step of preserving the food in claim 9 or 10, in a sealed or substantially sealed condition;
warming the wrapped food up to a temperature that exceeds the temperature where starch starts gelatinizing and is within a temperature range of pasteurization; and
keeping the food at the warmed temperature.

12. A device for preserving a heated and cooked food (provided with at least one topping), comprising:
a heating and cooking means that bakes a dough of the food after adding an inflating agent, including air bubbles or adding yeast and fermenting, so as to form the base of the food;
a topping means that provides the baked base of the food with the topping so as to form the heated and cooked food;
a storage means that preserves the heated-and-cooked food which is baked and provided with the topping, in a chilled or frozen condition;
wherein, at the upstream of the storage means, the device for preserving the food is provided with:
a cooling means that cools the heated and cooked food or a freezing means that freezes the heated and cooked food after the food is cooled; and
a water mist spraying means that sprays the mist of water toward the cooled or frozen food.

13. A device for preserving a heated and cooked food (provided with at least one ingredient), comprising:
a heating and cooking means that bakes a dough of the food after adding an inflating agent, including air bubbles or adding yeast in the dough and including the ingredient in the dough, in a case where the dough is added with the inflating agent or included with air bubbles, or bakes the dough after the dough is fermented, in a case where the dough is added with yeast, so as to form the heated and cooked food included with the ingredient,
a storage means that preserves the baked heated-and-cooked food in a chilled or frozen condition;
wherein, at the upstream of the storage means, the device for preserving the food is provided with:
a cooling means that cools the heated and cooked food or a freezing means that freezes the heated and cooked food after the food is cooled;
a water mist spraying means that sprays the mist of water toward the cooled or frozen food.

14. The device for preserving the heated and cooked food according to claim 12 or 13, further comprising:
a wrapping means that wraps the heated and cooked food preserved in the storage means in the claim 12 or 13, in a sealed or substantially sealed condition; and
a heater that is able to warm and incubate the wrapped heated-and-cooked food, in which the wrapped heated-and-cooked food is warmed up to a temperature that exceeds the temperature where the starch contained in the food starts gelatinizing and is within a temperature range of the pasteurization for the food, so that the food is kept at the to-be-kept temperature.

15. The device for preserving the heated and cooked food according to claim 14, wherein the heater is of an air circulating type and is able to circulate the air therein, so as to control the temperature therein in order to warm and incubate the heated and cooked food.

16. The device for preserving the heated and cooked food according to claim 14 or 15, the device also acting as a device for improving the taste and texture and comprising a baking means that is placed at an adjacent location of the heater and bakes the heated-and-cooked food after the wrapping of the food is removed the food which has been preserved as per the preserving step of claim 14 or 15; and the waste heat generated by the baking means, during the time span where the baking means bakes the heated and cooked food is used as a part of the heat source of the heater.

17. A device for preserving a heated and cooked food, comprising:
a heating and cooking means that steams a dough of the food after adding an inflating agent, including air bubbles or adding yeast and fermenting the dough, so as to form the heated and cooked food;
a cooling means that cools the steamed heated-and-cooked food;
a storage means that preserves the cooled heated-and-cooked food in a chilled condition, or in a frozen condition after the food is frozen by a freezing means; and
a water mist spraying means that sprays the mist of water toward the cooked-and-heated food after the food is steamed and before the food is cooled, while the food is being cooled, or after the food is frozen.

18. A device for preserving a heated and cooked food included with at least one ingredient, comprising:
a heating and cooking means that steams a dough of the food in a case where the dough is added with an inflating agent or included with air bubbles and included with the ingredient, or steams the dough after the dough is fermented in a case where the dough is added with yeast and included with the ingredient, so as to form the heated and cooked food included with the ingredient;
a cooling means that cools the steamed heated-and-cooked food;
a storage means that preserves the cooled heated-and-cooked food in a chilled condition, or in a frozen condition after the food is frozen by a freezing means;
wherein, the device further comprises:
a water mist spraying means that sprays the mist of water toward the
cooked-and-heated food after the food is steamed and before the food is cooled, while the food is being cooled, or after the food is frozen.

19. The device for preserving a heated and cooked food according to claim 17 or 18, further comprising;
a wrapping means that wraps the heated and cooked food preserved in the storage means in claim 17 or 18, in a sealed or substantially sealed condition, and
a heater that is able to warm and incubate the wrapped heated-and-cooked food:
wherein the heated and cooked food wrapped by the wrapping means is warmed up to a temperature that exceeds the temperature where the starch contained in the food starts gelatinizing and is within a temperature range of the pasteurization for the food, so that the food is kept at the to-be-kept temperature.

20. The device for preserving a heated and cooked food according to claim 19, wherein the heater is of an air circulating type and is able to circulate the air therein, so as to control the temperature therein in order to warm and incubate the heated and cooked food.

## Amended claims

### Amended claims under Art. 19.1 PCT

1. A chilled or frozen product of a heated and cooked food having a topping on a base, the food being produced by adding an inflating agent to a dough of the food, including air bubbles or adding yeast, fermenting and baking the dough;
wherein the heated and cooked food is sprayed with, after the food is frozen so as to form a film of ice on the surface of the food, and
the chilled or frozen product of the heated and cooked food is wrapped in a sealed or substantially sealed condition.

2. A chilled or frozen product of a heated and cooked food which is produced by adding an inflating agent to a dough of the food, including air bubbles or adding yeast, including the dough with at least one ingredient, and heating the dough;
wherein the heated and cooked food is sprayed with water after the food is frozen so as to form a film of ice on the surface of the food, and
the chilled or frozen product of the heated and cooked food is wrapped in a sealed or substantially sealed condition.

3. A method for preserving a heated and cooked food, thereby an inflating agent is added to the dough of the food, air bubbles are included in the dough, or yeast is added in the dough and the dough is fermented, the method comprising the steps of:
forming the base of the heated and cooked food by heating the dough; then,
providing at least one topping on the base of the food so as to form the heated and cooked food;
cooling or freezing the heated and cooked food provided with the topping;
wherein, the method further comprises the steps of:
forming a film of ice on the surface of the heated and cooked food that is cooled or frozen the above-described step of cooling or freezing, by spraying water toward the cooled or frozen food; then,
wrapping the heated and cooked food provided with the film of ice on the surface of the food, in a sealed or substantially sealed condition; then,
preserving the heated and cooked food in a chilled or frozen condition.

4. A method for preserving a heated and cooked food, comprising the steps of:
forming a base of the heated and cooked food by heating a dough of the food after adding an inflating agent to the dough, including air bubbles or adding yeast and fermenting;
providing at least one topping on the base of the food so as to form the heated and cooked food;
then removing rough heat of the heated and cooked food; and
cooling or freezing the heated and cooked food from which the rough heat is removed;
spraying water toward the cooled or frozen food to form a film of ice on the surface of the heated and cooked food that is cooled or frozen;
wrapping the heated and cooked food provided with the film of ice on the surface of the food, in a sealed or substantially sealed condition; then; and
preserving the heated and cooked food in a chilled or frozen condition.

5. A method for preserving a heated and cooked food, comprising the steps of:
heating a dough of the food after adding an inflating agent to the dough, including air bubbles or adding yeast and including at least one ingredient in the dough, so as to form the heated and cooked food included with the ingredient;
removing rough heat of the heated and cooked food;
cooling or freezing the heated and cooked food from which the rough heat is removed;
spraying water toward the heated and cooked food that is cooled or frozen, to form a film of ice on the surface of the heated and cooked food;
wrapping the heated and cooked food provided with the film of ice, in a sealed or substantially sealed condition; and
preserving the heated and cooked food in the chilled or frozen condition.

6. The method for preserving the heated and cooked food according to claim 3, 4, or 5, further comprising the steps of:
warming the heated and cooked food that is preserved as per the step of preserving in claim 3, 4 or 5, with wrapped in a sealed or substantially sealed condition, so that the temperature of the food exceeds the temperature where starch starts gelatinizing and the food is within a temperature range of pasteurization;
keeping the food at the warmed temperature.

7. The method for preserving the heated and cooked food according to claim 6, further comprising the step of:
baking the heated and cooked food preserved as per the preserving method of claim 6, after unwrapping the food, by use of a baking means.

8. The method for preserving the heated and cooked food according to claim 4, wherein the amount of water sprayed toward the heated and cooked food is set so that the moisture content ratio in the wrapped food corresponds to the moisture content ratio of the food which is cooled to a temperature level around 35°C where the step of removing the rough heat of food is almost finishes.

9. The method for preserving the heated and cooked food according to claim 5, wherein the amount of water sprayed toward the heated and cooked food is set so that the moisture content ratio in the wrapped food corresponds to moisture content ratio of the food which is on the way of the step of removing the rough heat of food, and cooled to a temperature level around 90°C where the step of removing the rough heat of food is on the way.

10. A device for preserving a heated and cooked food, comprising:
a heating and cooking means that heats a dough of the food after adding an inflating agent, including air bubbles or adding yeast and fermenting, so as to form a base of the food;
a topping means that provides the base of the food with at least one topping so as to form the heated and cooked food; and
a cooling or freezing means that cools or freezes the heated and cooked food which is heated and provided with the topping:
wherein, downstream of the cooling or freezing means, the device further comprises;
an ice film forming means that forms a film of ice on the surface of the heated and cooked food that is cooled or frozen, by spraying water toward the cooled or frozen food, and
a wrapping means that wraps the heated and cooked food provided with the film of ice on the surface of the food, in a sealed or substantially sealed condition.

11. A device for preserving a heated and cooked food, comprising:
a heating and cooking means that heats a dough of the food after adding an inflating agent, including air bubbles or adding yeast and fermenting, so as to form a base of the food;
a topping means that provides the base of the food with at least one topping so as to form the heated and cooked food;
a rough heat removing means that removes rough heat of the heated and cooked food provided with the topping; and
a cooling or freezing means that cools or freezes the heated and cooked food from which the rough heat is removed:
wherein, downstream of the cooling or freezing means, the device further comprises;
an ice film forming means that forms a film of ice on the surface of the heated and cooked food that is cooled or frozen through the cooling or freezing means, by spraying water toward the cooled or frozen food, and
a wrapping means that wraps the heated and cooked food provided with the film of ice on the surface of the food, in a sealed or substantially sealed condition.

12. A device for preserving a heated and cooked food, comprising:
thereby, the device comprising:
a heating and cooking means that heats a dough including an ingredient, which is made by adding an inflating agent, including air bubbles or adding yeast and including the ingredient, so as to form the heated and cooked food;
a rough heat removing means that removes the rough heat of the heated and cooked food that is formed by the heating and cooking means;
a cooling or freezing means that cools or freezes the heated and cooked food from which the rough heat is removed;
wherein, downstream of the cooling or freezing means, the device further comprises;
an ice film forming means that forms a film of ice on the surface of the heated and cooked food that is cooled or frozen through the cooling or freezing means, by spraying water toward the cooled or frozen food, and
a wrapping means that wraps the heated and cooked food provided with the film of ice on the surface of the food, in a sealed or substantially sealed condition.

13. The device for preserving the heated and cooked food according to claim 10, 11 or 12, further comprising a heater that is able to warm and incubate the wrapped heated-and-cooked food;
wherein the wrapped heated-and-cooked food is warmed up to a temperature that exceeds the temperature where the starch contained in the food starts gelatinizing and is within a temperature range of the pasteurization for the food, so that the food is kept at the warmed temperature.

14. The device for preserving the heated and cooked food according to claim 13, wherein the heater is of an air circulating type and is able to circulate the air therein, so as to control the temperature therein in order to warm and incubate the heated and cooked food.

15. The device for preserving the heated and cooked food according to claim 13 or 14, the device also acting as a device for improving the taste and texture and comprising a baking means that is placed at an adjacent location of the heater and bakes the heated-and-cooked food after the wrapping of the food is removed the food which has been preserved as per the preserving step of claim 13 or 14; and the waste heat generated by the baking means, during the time span where the baking means bakes the heated and cooked food is used as a part of the heat source of the heater.

16. The device for preserving the heated and cooked food according to claim 11, wherein the amount of water sprayed toward the heated and cooked food is set so that the moisture content ratio in the wrapped food corresponds to the moisture content ratio of the food which is cooled to a temperature level around 35°C where the rough heat removing-means almost removes the rough heat of the heated and cooked food that is formed by the heating and cooking means.

17. The device for preserving the heated and cooked food according to claim 12, thereby the amount of water sprayed toward the heated and cooked food is set so that the moisture content ratio in the wrapped food corresponds to the moisture content ratio of the food which is on the way through the rough heat-removing-means, and cooled to a temperature level around 90°C.
